# EUROPÄISCHE PATENTSCHRIFT

(11) **EP 1 245 861 B1**
(45) Veröffentlichungstag und Bekanntmachung des Hinweises auf die Patenterteilung: **22.10.2003**
(21) Anmeldenummer: 01107582.7
(22) Anmeldetag: 27.03.2001
(51) Int. Cl.: F16G 3/16

(54) **Vorrichtung zum Einpressen von Gurtverbindungen**
Device for inserting belt fasteners
Dispositif pour enfoncer des agrafes de jonction de courroie

(43) Veröffentlichungstag der Anmeldung: 02.10.2002
(73) Patentinhaber: MATO Maschinen- und Metallwarenfabrik Curt Matthaei GmbH & Co KG, D-63071 Offenbach (DE)
(72) Erfinder: Herold, Wolfgang, 63075 Offenbach/Main (DE)
(74) Vertreter: Quermann, Helmut, Dipl.-Ing.

(56) Entgegenhaltungen:
- DE-A- 3 219 767
- US-A- 1 550 788
- US-A- 2 058 767

## Beschreibung

Die Erfindung betrifft eine Vorrichtung zum Einpressen von Gurtverbindern, insbesondere Drahthaken, in einen Gurt, mit einem Basiselement mit Halteeinrichtung für die Gurtverbinder, einem im Basiselement schwenkbar gelagerten Pressbackenpaar zum gegensinnig gerichteten Einwirken auf die Gurtverbinder sowie Kraftmitteln zum Zustellen der Pressbacken des Pressbackenpaares.

Bei derartigen Vorrichtungen wird das Gurtende zwischen den sich noch in geöffneter Stellung befindlichen Gurtverbindern positioniert und, durch Einwirken der Pressbacken auf die Schenkel der Gurtverbinder, eine Bewegung der Schenkel aufeinander zu erzeugt, so dass die Gurtverbinder mit ihren spitzen Endabschnitten den Gurt durchdringen und insgesamt zwischen den Pressbacken gepresst werden. Nachteilig ist bei den bekannten Einpressgeräten, die es gemäß vielfältigem Stand der Technik und schon seit Jahrzehnten gibt, dass keine optimale Kraft auf die Gurtverbinder, insbesondere Drahthaken, ausgeübt wird. Dies führt dazu, dass der vordere, abgerundete Bereich der Gurtverbinder bzw. Drahthaken, durch die ein Stab zum positionieren der Gurtverbinder in der Halteeinrichtung gesteckt wird, nicht U-förmig ist, sondern eher O-förmig gestaltet ist. Diese unzureichende Ausformung der Gurtverbinder beim Einpressen führt auch zu erhöhten Vibrationen beim Umlauf des Gurtes, sowie erhöhtem Verschleiß der Gurtverbindung.

Bekannte Einpressgeräte wirken in aller Regel mit Schraubstöcken zusammen. Durch Zustellen der einen beweglichen Schraubstockbacke werden die Pressbacken des Pressbackenpaares aufeinander zu bewegt. Bei Verwendung eines Schraubstockes mit dessen Pressbacken im Sinne von Kraftmitteln zum Zustellen der Pressbacken des Pressbackenpaares führt dies dazu, dass der eine Pressbacken des Pressbackenpaares, der mit dem beweglichen Backen des Schraubstockes in Anlage gelangt, seine Druckkraft über die Gurtverbinder bzw. Drahthaken und den eingelegten Fördergurt auf den anderen Pressbacken des Pressbackenpaares überträgt, der am anderen, festen Pressbalken des Schraubstockgerätes anliegt. Diese Kinematik ist ursächlich dafür verantwortlich, dass der Gurtverbinder bzw. Drahthaken nur unzureichend in den Fördergurt eingebracht werden kann.

Eine Vorrichtung der eingangs genannten Art ist aus der DE 32 19 767 C2 bekannt. Sie dient dem Einpressen von Drahthaken unter Verwendung eines Schraubstockgerätes. Die Vorrichtung weist eine Halteeinrichtung mit einer nicht veränderbaren kammartigen Aufnahme fiir die Drahthaken auf. Die Halteeinrichtung durchsetzt ein Lagerbolzen, in dem, über Langlöcher die Pressbacken des Pressbackenpaares gelagert sind. Durch Federmittel sind die Pressbacken in ihre Öffnungsstellung vorgespannt. Die in Offenstellung befindliche Vorrichtung wird von oben zwischen die in Offenstellung befindlichen Backen des Schraubstockgerätes eingehängt. Beim Schließen des Schraubstockgerätes, demnach dem Bewegen der einen Backe des Schraubstockgerätes in Richtung der feststehenden Backe des Schraubstockgerätes, bewegen sich die Pressbacken der Vorrichtung aufeinander zu und es durchdringen die freien Enden der Drahthaken den Fördergurt. Kurz bevor die maximale Presskraft über die Backen des Schraubstockgerätes in den Fördergurt eingeleitet wird, bewegen sich die Pressbacken der Vorrichtung im Bereich deren Langlochlagerungen auseinander. Um dies bewerkstelligen zu können, sind die Druckflächen der Backen des Schraubstockgerätes nicht eben, sondern leicht geknickt ausgebildet. Zum Einpressen der Gurtverbinder kann somit kein üblicher Schraubstock mit ebenen Druckflächen Verwendung finden. Muß ein Gurt, gegebenenfalls anderer Stärke, mit eine andere Teilung aufweisenden Drahthaken versehen werden, ist es erforderlich eine andere Vorrichtung mit einer anderen Teilung aufweisenden kammartigen Aufnahmen für die Drahthaken zu verwenden. Eine bestehende Vorrichtung kann somit nicht auf den neuen Anwendungsfall umgerüstet werden.

Aufgabe der Erfindung ist es, eine Vorrichtung der eingangs genannten Art so weiterzubilden, dass Schließkräfte beim Einpressen der Gurtverbinder bzw. Drahthaken optimal in die beiderseits des Gurtes angeordneten Gurtverbinder bzw. Drahthaken eingeleitet werden. Die Vorrichtung soll sich ferner durch einen einfachen Aufbau und einen einfachen Bewegungsablauf beim Schließen auszeichnen.

Gelöst wird die Aufgabe bei der Vorrichtung der eingangs genannten auch dadurch, dass Mittel zum Zwangskoppeln der Schwenkbewegungen der Pressbacken relativ zum Basiselement vorgesehen sind.

Die Pressbacken sind demzufolge nicht frei bezüglich des Basiselementes bewegbar, sondern es erfolgt die Schwenkbewegung der Pressbacken, bezogen auf das Basiselement, synchron. Die Vorrichtung ist damit unabhängig von der Wirkungsweise der Kraftmittel zum Zustellen der Pressbacken. Es ist demzufolge bei der Verwendung beispielsweise eines Schraubstockgerätes unerheblich, dass eine Backe des Schraubstockgerätes fest ist, während die andere Backe beweglich ist. Die Zwangskopplung der Schwenkbewegungen der Pressbacken führt dazu, dass über beide Pressbacken Schließkräfte in die Gurtverbinder bzw. Drahthaken eingeleitet werden. Auf besonders einfache Art und Weise kann die Zwangskopplung bewerkstelligt werden, wenn die Pressbacken Zahnkranzabschnitte aufweisen, die miteinander kämmen. Baulich läßt sich eine solche Gestaltung dann besonders einfach verwirklichen, wenn die beiden Pressbacken um unterschiedliche Schwenkachsen schwenkbar im Basiselement gelagert sind.

Um den Einpressvorgang zu optimieren, ist Wert auf eine einfache Relativbewegung der Pressbacken zu legen. Dies insbesondere unter dem Aspekt, dass die Lagerung der Pressbacken nicht über eine, relativ undefinierte Langlochführung der Pressbacken in Lagerzapfen des Basiselementes erfolgt, sondern statt dessen eine Lagerung vorgesehen ist, die ausschließlich eine Schwenkbewegung der Pressbacken um die zugeordnete Lagerachse des Basiselementes ermöglicht.

Um sicherzustellen, dass insbesondere die Spitzen der Gurtverbinder bzw. Drahthaken mit optimaler Kraft in den Fördergurt eingepresst werden, sollte die jeweilige Pressbacke zweiteilig ausgebildet sein. Sie weist insbesondere ein schwenkbar im Basiselement gelagertes Backengrundelement und ein mit dem Backengrundelement verbundenes, relativ zu diesem bewegliches Backenpresselement auf, wobei die Kraftmittel auf das Backenpresselement einwirken. Eingangs der Schließbewegung des Pressbackenpaares sollten das Backengrundelement und das Backenpresselement gegeneinander positioniert sein, so dass eine präzise Bewegung des Pressbackens gewährleistet ist. Erst in einer Endphase des Pressvorganges, wenn es primär darauf ankommt, die hohen Presskräfte über die Kraftmittel zum Zustellen der Pressbacken des Pressbackenpaares auf die Pressbacken und von dort auf die Gurtverbinder zu übertragen, wird der Kontakt von Backenpresselement und Backengrundelement aufgehoben, da es nur noch auf die Wirkung des jeweiligen Backenpresselementes ankommt. Der Hauptpressdruck des jeweiligen Backenpresselementes wirkt auf die Durchdringungsstelle der Gurtverbinder bzw. Drahthaken.

Der Einpressvorgang kann durchaus mittels eines Schraubstockgerätes erfolgen, bei dem die aufeinander zu gewandten Pressflächen der Backen ausschließlich parallel angeordnet sind. Die Kraftmittel zum Zustellen der Pressbacken können gemäß einer weiterhin vorteilhaften Ausgestaltung als Bestandteile einer hydraulischen Presse ausgebildet sein.

Die Rückführung der Pressbacken in deren Offenstellung erfolgt beim Lösen der Kraftmittel zum Zustellen der Pressbacken vorzugsweise mittels Federkraft. Auch zum Anlegen des Backenpresselements an das Backengrundelement sind zweckmäßig Federmittel vorgesehen, insbesondere eine Zugfeder.

Vorzugsweise weist die Halteeinrichtung für die Gurtverbinder entsprechend der Anordnung der Gurtverbinder kammartige Aufnahmen für die Gurtverbinder auf. Durch diese kammartige Ausbildung können die Gurtverbinder auf einfache Art und Weise definiert in der Halteeinrichtung positioniert werden. Bezogen auf Drahthaken ist die Vorrichtung sowohl für Querdraht gefasste, als auch für Papier gefasste Varianten der Drahthaken einsetzbar. Zum Fixieren der in die Halteeinrichtung eingesetzten Gurtverbinder ist in bekannter Art und Weise ein Steckstift vorgesehen.

Gemäß einer besonderen Ausführungsform der Erfindung ist vorgesehen, dass die Halteeinrichtung für die Gurtverbinder und das Basiselement separate Bauteile bilden. Sollen Gurtverbinder anderer Teilung in einen Gurt eingepresst werden, insbesondere einen Gurt anderer Dicke, ist es demzufolge nicht erforderlich, die Vorrichtung gegen eine andere Vorrichtung mit anderer Teilung der Halteeinrichtung bzw. der kammartigen Aufnahmen zu ersetzen, sondern es muss nur die Halteeinrichtung für die Gurtverbinder ausgetauscht werden. Auf besonders einfache Art und Weise kann dies bewerkstelligt werden, wenn das Basiselement eine Aufnahme zum Einschieben der Halteeinrichtung aufweist. Die Halteeinrichtung ist insbesondere formschlüssig im Basiselement gehalten. Konkret sollte die Halteeinrichtung in einer Richtung parallel zu den Schwenkachsen des Pressbackenpaares in das Basiselement einschiebbar bzw. verschiebbar sein. Zweckmäßig ist die Halteeinrichtung etwa 1½ bis 2 mal so lang wie die Erstreckung des Pressbackenpaares in Längsrichtung der Halteeinrichtung. Unter diesem Aspekt ist das Merkmal der Verschiebbarkeit der Halteeinrichtung zu sehen. Es ermöglicht es, die Halteeinrichtung bzw. den Kamm sukzessive vorzuschieben und somit immer nur einige der Gurtverbinder bzw. Drahthaken zu verschließen, dies allerdings präzise und bei hohem Druck. Wäre die Halteeinrichtung nicht verschiebbar, würde die Druckkraft sich auf die gesamte Breite der Halteeinrichtung bzw. des Kammes und demzufolge auf viele in die Halteeinrichtung eingelegte Gurtverbinder verteilen.

Weitere Merkmale der Erfindung sind in der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines Ausführungsbeispieles dargestellt, ohne hierauf beschränkt zu sein. Es stellt dar:
- Fig. 1: einen Schnitt durch die erfindungsgemäße Vorrichtung gemäß der Linie A-A in Fig. 2, allerdings ohne die als Drahthaken ausgebildeten Gurtverbinder und den Fördergurt veranschaulicht,
- Fig. 2: eine Stirnansicht der in Fig. 1 gezeigten Vorrichtung, teilweise geschnitten dargestellt, mit in die Halteeinrichtung eingelegten Drahthaken und zwischen diesen positioniertem Gurtende, bei in vollständig geöffneter Stellung befindlichem Pressbackenpaar,
- Fig. 3: eine Darstellung gemäß Fig. 2, bei teilweise geschlossenem Pressbackenpaar und
- Fig. 4: eine Darstellung gemäß den Fig. 2 und 3, bei vollständig geschlossenem Pressbackenpaar.

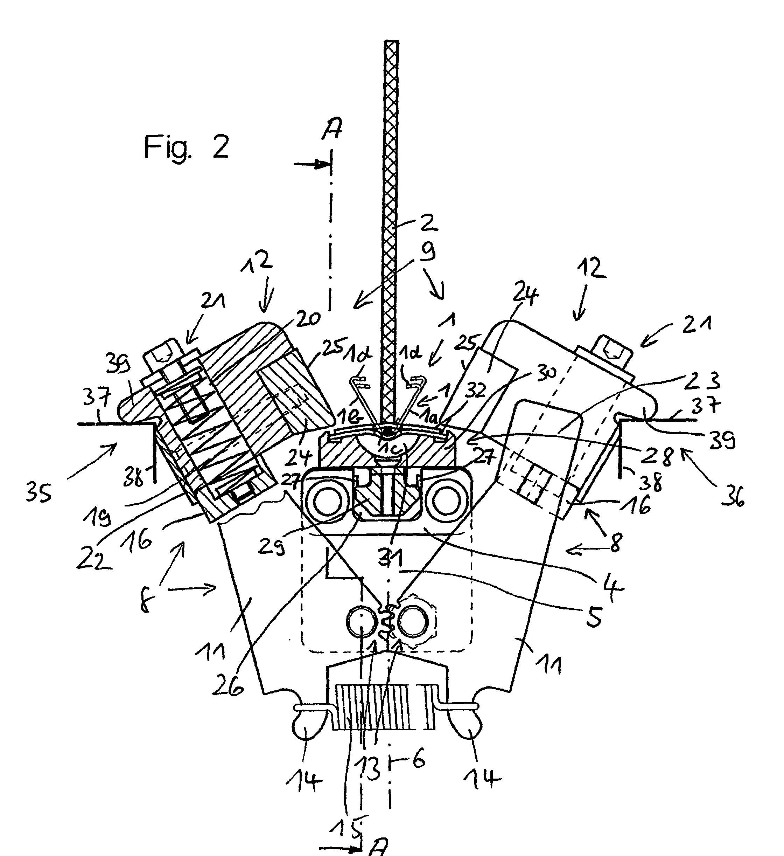

Die in den Figuren gezeigte Vorrichtung dient dem Einpressen von aus dem Stand der Technik hinlänglich bekannten Drahthaken, die beispielsweise in Papier gefasst sind. Der jeweilige Drahthaken 1 weist einen relativ kürzeren Schenkel 1a und einen relativ längeren Schenkel 1b auf. Die beiden Schenkel 1a und 1b sind mittels eines Bogenabschnittes 1c miteinander verbunden. An die dem Bogenabschnitt 1c abgewandten Enden der Schenkel 1a und 1b schließen sich, unter einem spitzen Winkel und aufeinander zu gerichtet, spitzen Hakenansätze 1d an. Bezogen auf die Ansicht gemäß der Fig. 2 sind eine Vielzahl der Drahthaken 1 hintereinander angeordnet. In dieser Darstellung sind nur zwei Drahthaken 1 sichtbar, da deren kurze und lange Schenkel 1a, 1b hintereinander alternierend positioniert sind. Zwischen den Schenkeln 1a und 1b der Drahthaken 1 ist ein Gurtende eines Fördergurtes 2 positioniert. Im Bereich des Fördergurtendes sollen die Drahthaken 1 mittels der erfindungsgemäßen Vorrichtung in den Fördergurt 2 eingepresst werden.

Die Vorrichtung zum Einpressen der Drahthaken 1 weist ein Basiselement 3 auf. Dies ist durch ein längsorientiertes Aufnahmeteil 4 und mit dessen Stirnseiten mittels Schrauben 40 verbundene Lagerplatten 5 gebildet. Jede Lagerplatte 5 weist zwei symmetrisch zur Symmetrieachse 6 der Lagerplatte 5 angeordnete Bohrungen auf. Lagerbolzen 7 mit endständigen Gewindeabschnitten durchsetzen diese Bohrungen und Bohrungen in den Pressbacken 8 des Pressbackenpaares 9. Muttern 10 sichern die Lagerbolzen 7. Jeder Pressbacken 8 ist im wesentlichen durch zwei plattenförmige Backengrundelemente 11 und ein mit diesem verbundenes, sich in Längsrichtung der Vorrichtung, somit parallel zum Aufnahmeteil 4 erstreckendes Backenpresselement 12 gebildet. Die Backengrundelemente 11 sind jeweils in den Lagerbolzen 7 schwenkbar gelagert und auf derjenigen Seite der jeweiligen Lagerplatte 5 positioniert, die der anderen Lagerplatte 5 abgewandt ist. Im Bereich zwischen den Lagerbolzen 7 sind die Backengrundelemente 11 jeder Seite der Vorrichtung mit Zahnkranzabschnitten 13 versehen, wobei die Zähne der Zahnkranzabschnitte 13 der auf der jeweiligen Seite angeordneten Backengrundelemente 11 miteinander kämmen. Eine definierte Schwenkbewegung eines Backengrundelementes 11 relativ zur Lagerplatte 5 führt infolgedessen zu einer entsprechenden Schwenkbewegung des anderen Backengrundelementes 11 bezüglich der Lagerplatte 5. An unteren Vorsprüngen 14 der benachbarten Backengrundelemente 11 greift eine Zugfeder 15 an und spannt das Pressbackenpaar 9 damit in seiner geöffneten Stellung vor.

Die beiden Backengrundelemente 11 der jeweiligen Pressbacke 8 verbindet ein parallel zur Längserstreckung des Aufnahmeteils 4 angeordnetes Verbindungselement 16, das eine ebene Anlagefläche 17 zur Anlage einer Anlagefläche 18 des Backenpresselementes 12 aufweist. Das Backenpresselement 12 und das Verbindungselement 16 werden mittels mehrerer Zugfedern 19 gegeneinander gedrückt. Diese Zugfedern 19 durchsetzen Bohrungen 20 im Backenpresselement 12 und sind im Verbindungselement 16 und Schraubengegenlagern 21 im Backenpresselement 12 gehalten. Um die seitlich Führung des jeweiligen Backenpresselementes 12 zum zugeordneten Verbindungselement 16 zu gewährleisten, weist das Backenpresselement 12 auf seiner dem Fördergurt 2 abgewandten Seite eine Führungsplatte 22 auf, die beim Annähern von Backenpresselement 12 und Verbindungselement 16 letztgenanntes überlappt; des weiteren sind die Backengrundelemente 11 des jeweiligen Pressbackens 8 soweit über das Verbindungselement 16 hinaus verlängert, dass sie, in jeder Betriebsstellung der Vorrichtung, das Backenpresselement 12 stirnseitig zwischen den Ansätzen 23 führen.

Auf den einander zugewandten Seiten nehmen die Backenpresselemente 12 in Hinterschneidungen Presseinsätze 24 auf, die mit ebenen Pressflächen 25 versehen sind. Diese Pressflächen 25 gelangen in Kontakt mit den Drahthaken 1, wobei sie in ihrer Endstellung parallel zueinander und parallel zum Fördergurt 2 angeordnet sind. Die Presseinsätze 24 sind mit einer Schraubverbindung befestigt und können daher ohne weiteres ausgetauscht werden, insbesondere wenn sie verschlissen sind.

Das Aufnahmeteil 4 ist auf seiner dem Lagerbolzen 7 abgewandten Seite mit einer in Längsrichtung des Aufnahmeteils 4 verlaufenden Nut 26 versehen. In Längsrichtung der Nut 26 verlaufende Stege 27 ragen geringfügig in diese, so dass sich die Nut 26 als hinterschnittene Nut darstellt. In die Nut 26 ist eine Halteeinrichtung 28 einschiebbar, die oben auf dem Aufnahmeteil 6 aufliegt und die mit einem unteren, T-förmigen Ansatz 29 versehen ist, der die Nut 26 durchsetzt und die Stege 27 mit geringem Spiel hintergreift.

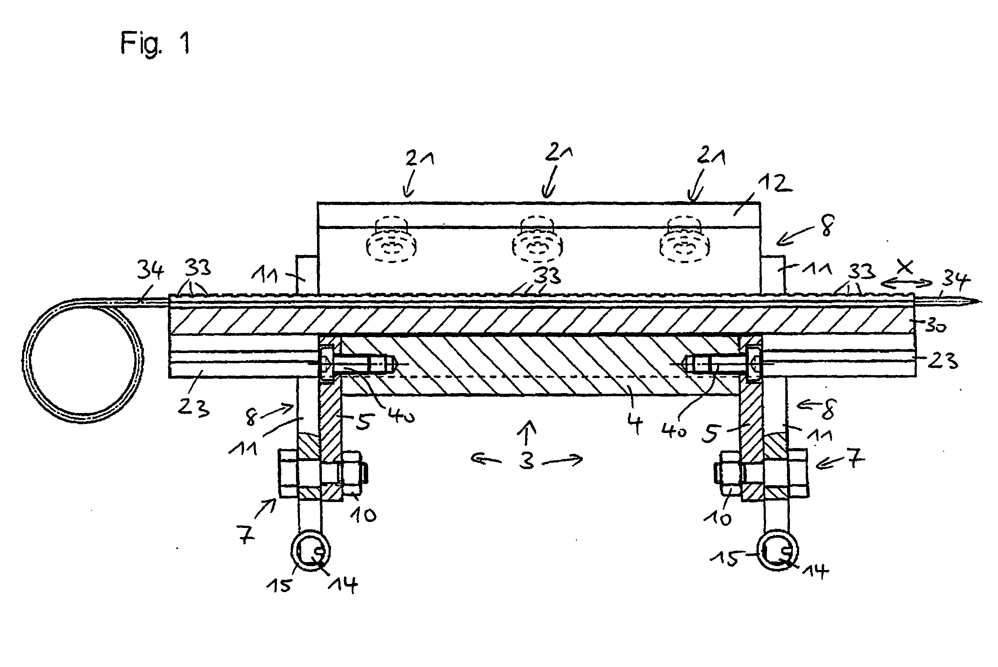

Die Halteeinrichtung 28 ist damit in den Richtungen des in der Fig. 1 gezeigten Doppelpfeiles X relativ zum Aufnahmeteil 4 verschiebbar. Die Halteeinrichtung 28 weist eine Länge auf, die 1 ½ bis 2 mal so lang ist, wie die Erstreckung des Aufnahmeteiles 4.

Der auf dem Aufnahmeteil 4 aufliegende Teil 30 der Halteeinrichtung 28 ist oben mit einer sich über dessen Länge erstreckenden Vertiefung 31 versehen, die mittels einer doppelwandigen Abdeckung 32 abgedeckt ist. Diese ist entsprechend der Teilung der Drahthaken 1 mit kammartigen Öffnungen, somit sich quer zur Längserstreckung der Halteeinrichtung 28 orientierten Schlitzen 33 versehen, wobei jeder Schlitz der Aufnahme eines Drahthakens 1 im Bereich dessen Bogenabschnittes 1c dient. In diesem Bereich sind die beiden Wandungen der Abdeckung 32 geringfügig auseinandergebogen, so dass dort seitlich ein Bestandteil der Halteeinrichtung 28 bildender Stift 34 eingeschoben werden kann. Dieser Stift 34 erstreckt sich über die gesamte Länge des Teiles 30 und ist zwischen die obere Wand der Abdeckung 32 und die Bogenabschnitte 1c der Drahthaken 1 eingeführt. Durch das im wesentlichen spielfreie Einführen des Stiftes 34 werden die vielen Drahthaken 1 in der in der Fig. 2 gehaltenen Positionen fixiert. Zwischen die Schenkel 1a und 1b der Drahthaken 1 wird der Fördergurt 2 eingelegt, der in seiner unteren Stirnfläche auf der oberen Wandung der Abdeckung 32 aufliegt. In der in Fig. 2 gezeigten Ausgangssituation sind die Drahthaken 1 und der Fördergurt 2 symmetrisch zur Symmetrieachse 6 positioniert.

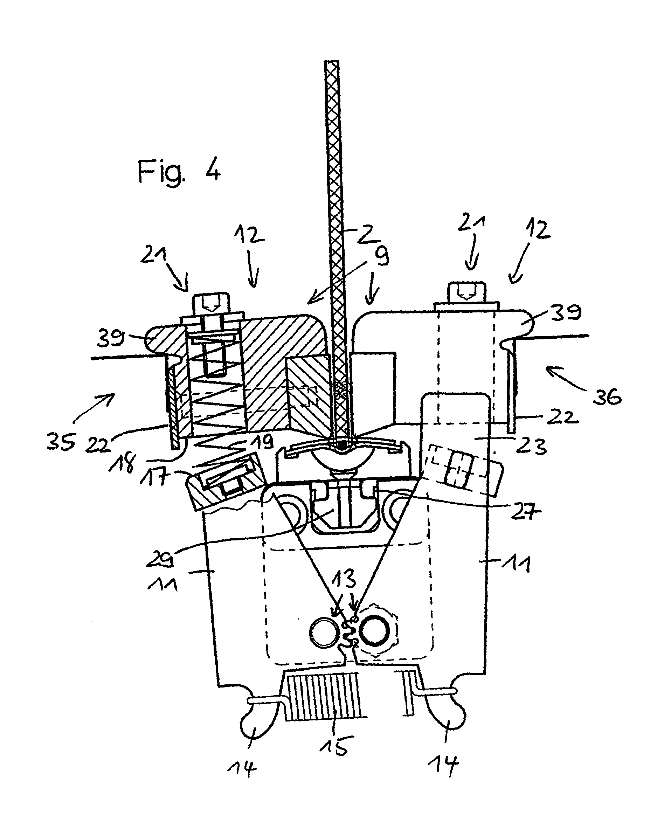

Die Kraftmittel zum Zustellen der Pressbacken 8 des Pressbackenpaares 9 sind in den Figuren 2 und 4 durch die Backen 35 und 36 eines sonst nicht näher verdeutlichten Schraubstockgerätes veranschaulicht. Die Backen 35 und 36 weisen eine horizontale Oberfläche 37 und eine vertikale, der Einpressvorrichtung zugeordnete Fläche 38 auf. Das jeweilige Backenpresselement 12 ist auf seiner den Backen 35 bzw. 36 zugeordneten Seite mit einer vorspringenden Nase 39 versehen, die es erlaubt die Vorrichtung zum Einpressen in diesem Bereich zwischen die Backen 35 und 36 des Schraubstockgerätes einzuhängen, wobei die Nasen 39 auf den oberen Flächen 37 der Backen 35 und 36 aufliegen. Das Schraubstockgerät wird manuell betätigt, wobei beispielsweise die Backe 35 feststehend ist und sich beim Schließen des Schraubstockes die Backe 36 auf die Backe 35 zu bewegt.

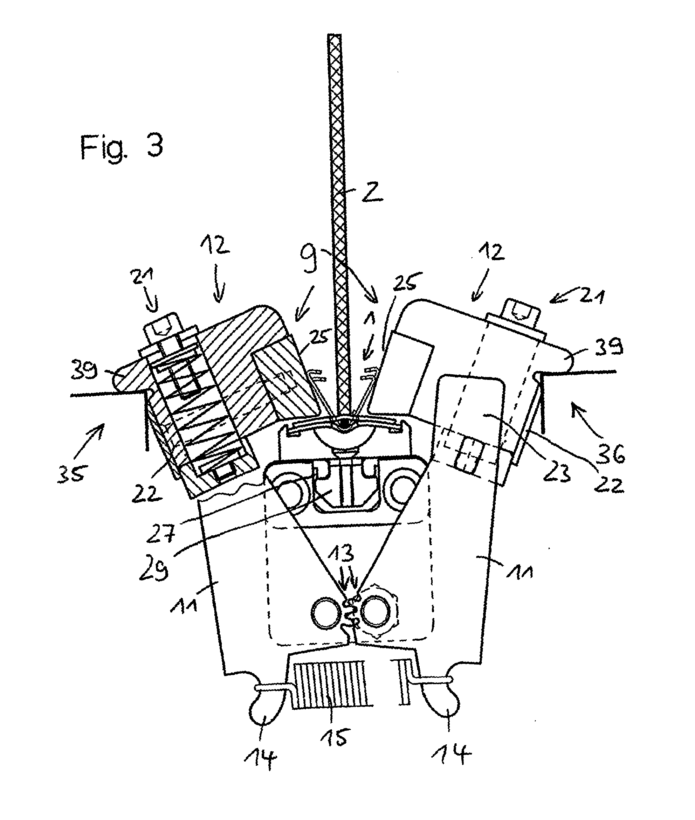

Fig. 3 zeigt die Situation bei näher aufeinander zu bewegten Backen 35 und 36 des Schraubstockgerätes: Die beiden Pressbacken 8 sind näher aufeinander zu bewegt, wobei die Zwangsbewegung der Pressbacken 8 aufgrund der Verzahnung im Bereich der Zahnkranzabschnitte 13 erfolgt. Die Zugfedern 19 halten in diesem Stadium die Backenpresselemente 12 und die Backengrundelemente 11 aneinander. Beim weiteren aufeinander zu bewegen der Backen 35 und 36 des Schraubstockgerätes wird der gegenständliche Kontakt der Backengrundelemente 11 und Backenpresselemente 12 unter Berücksichtigung der wirkenden Federkräfte der Zugfedern 19 und der Zugfedern 15 aufgehoben und es schwenken, ungeachtet der weiteren Schwenkbewegungen der Backengrundelemente 11 aufeinander zu, die Backenpresselemente 12 bezüglich der Backengrundelemente 11, so dass die Backenpresselemente 12 mit deren Führungsplatten 22 flächig an den seitlichen Flächen 38 der Backen 35 und 36 anliegen. Dieser Schwenkvorgang der Backenpresselemente 12 erfolgt im Wesentlichen mit dem Biegen der Schenkel 1a und 1b der Drahthaken 1 auf den Fördergurt 2 hin. Bei Anlage der Schenkel 1a und 1b der Drahthaken 1 am Fördergurt 2 erfolgt das abschließende Verpressen der Drahthaken 1 mit dem Fördergurt 2 unter Einwirkung senkrecht zum Fördergurt 2 gerichteter Presskräfte. Dieser Zustand ist in Fig. 4 veranschaulicht. Beim Öffnen der Backen 95 und 96 des Schraubstockgerätes ziehen die Federn 19 die Backenpresselemente 12 wieder gegen die Backengrundelemente 11.

## Patentansprüche

1. Vorrichtung zum Einpressen von Gurtverbindern (1), insbesondere Drahthaken (1), in einen Gurt (2), mit einem Basiselement (3) mit Halteeinrichtung (28) für die Gurtverbinder (1), einem im Basiselement (3) schwenkbar gelagerten Pressbackenpaar (9) zum gegensinnig gerichteten Einwirken auf die Gurtverbinder (1) sowie Kraftmitteln (35, 36) zum Zustellen der Pressbacken (8) des Pressbackenpaares (9), **dadurch gekennzeichnet, dass** Mittel (13) zum Zwangskoppeln der Schwenkbewegungen der Pressbacken(8) relativ zum Basiselement (3) vorgesehen sind.

2. Vorrichtung nach Anspruch 1, **dadurch gekennzeichnet, dass** die Mittel (13) zum Zwangskoppeln der Schwenkbewegungen der Pressbacken (8) als Zahnkranzabschnitte (13) ausgebildet sind, wobei der Zahnkranzabschnitt (13) des einen Pressbackens (8) mit dem Zahnkranzabschnitt (13) des anderen Pressbackens (8) kämmt.

3. Vorrichtung nach Anspruch 1 oder 2, **dadurch gekennzeichnet, dass** die beiden Pressbacken (8) um unterschiedliche Schwenkachsen (7) schwenkbar im Basiselement (3) gelagert sind.

4. Vorrichtung nach einem der Ansprüche 1 bis 3, **dadurch gekennzeichnet, dass** die jeweilige Pressbacke (8) ein schwenkbar im Basiselement (3) gelagertes Backengrundelement (11) und ein mit dem Backengrundelement (11) verbundenes, relativ zu diesem bewegliches Backenpresselement (12) aufweist, wobei die Kraftmittel (35, 36) auf die Backenpresselemente (12) einwirken.

5. Vorrichtung nach Anspruch 4, **dadurch gekennzeichnet, dass** das Backenpresselement (12) in der Schwenkebene des Backengrundelementes (11) schwenkbar ist.

6. Vorrichtung nach Anspruch 4 oder 5, **dadurch gekennzeichnet, dass** das Backengrundelement (11) und das Backenpress-element (12) mittels Federmitteln (19), insbesondere mittels Zugfedern (19) mit einander verbunden sind.

7. Vorrichtung nach einem der Ansprüche 4 bis 6, **dadurch gekennzeichnet, dass** das Backengrundelement (11) und das Backenpresselement (12) senkrecht zur Schwenkebene der Pressbacken (8) relativ zueinander geführt sind.

8. Vorrichtung nach einem der Ansprüche 1 bis 7, **dadurch gekennzeichnet, dass** Federmittel (15) auf die Pressbacken (8) einwirken, derart, dass das Pressbackenpaar (9) in Richtung seiner geöffneten Stellung vorgespannt ist.

9. Vorrichtung nach einem der Ansprüche 1 bis 8, **dadurch gekennzeichnet, dass** die Halteeinrichtung (28) für die Gurtverbinder (1) entsprechend der Teilung der Anordnung der Gurtverbinder (1) kammartige Aufnahmen (33) für die Gurtverbinder (1) aufweist.

10. Vorrichtung nach einem der Ansprüche 1 bis 9, **dadurch gekennzeichnet, dass** die Halteeinrichtung (28) für die Gurtverbinder (1) eine Aufnahme für einen Steckstift (34) aufweist, zum Fixieren der Gurtverbinder (1) in der Halteeinrichtung (28).

11. Vorrichtung nach einem der Ansprüche 1 bis 10, **dadurch gekennzeichnet, dass** die Halteeinrichtung (28) für die Gurtverbinder (1) und das Basiselement (3) separate Bauteile bilden.

12. Vorrichtung nach Anspruch 11, **dadurch gekennzeichnet, dass** das Basiselement (3) eine Aufnahme (26, 27) zum Einschieben der Halteeinrichtung (28) in das Basiselement (3) aufweist.

13. Vorrichtung nach Anspruch 12, **dadurch gekennzeichnet, dass** die Halteeinrichtung (28) in einer Richtung (X) parallel zu den Schwenkachsen des Pressbackenpaares (9) in das Basiselement (3) einschiebbar bzw. im Basiselement (3) verschiebbar ist.

14. Vorrichtung nach Anspruch 13, **dadurch gekennzeichnet, dass** die Halteeinrichtung (28) eine Länge aufweist, die 1 ½ bis 2 mal so lang ist wie die Erstreckung des Pressbackenpaares (9) in dieser Richtung.

15. Vorrichtung nach einem der Ansprüche 1 bis 14, **dadurch gekennzeichnet, dass** das Basiselement (3) eine hinterschnittene Nut (26) zur Aufnahme der Halteeinrichtung (28) aufweist.

16. Vorrichtung nach einem der Ansprüche 11 bis 15, **dadurch gekennzeichnet, dass** das Basiselement (3) der Aufnahme unterschiedlicher Halteeinrichtungen (28) dient, wobei die jeweilige der unterschiedlichen Halteeinrichtungen (28) der Aufnahme eines definierten Gurtverbindertyps dient.

17. Vorrichtung nach einem Ansprüche 1 bis 16, **dadurch gekennzeichnet, dass** die Kraftmittel (35, 36) zum Zustellen der Pressbacken (8) als Backen (35, 36) eines Schraubstocks oder Backen einer hydraulischen Presse ausgebildet sind.

## Claims

1. Device for inserting belt fasteners (1), particularly wire hooks (1), in a belt (2), having a base element (3) with a holder device (28) for the belt fasteners (1), a press jaw pair (9) rotatably mounted in the base element (3) for action in opposing directions against the belt fasteners (1) and force application means (35, 36) for closing the press jaws (8) of the press jaw pair (9), **characterised in that** means (13) are provided for forced coupling of the rotation movements of the press jaws (8) relative to the base element (3).

2. Device according to Claim 1, **characterised in that** the means (13) for forced coupling of the rotation movements of the press jaws (8) are designed as toothed gear sections (13), whereby the toothed gear section (13) of the one press jaw (8) meshes with the toothed gear section (13) of the other press jaw (8).

3. Device according to Claim 1 or 2, **characterised in that** the two press jaws (8) are mounted in the base element (3) rotatable about different rotation axes (7).

4. Device according to one of the claims 1 to 3, **characterised in that** each press jaw (8) has a jaw fundament element (11) rotatably mounted in the base element (8) and a jaw press element (12) linked to the jaw fundament element (11), movable relative to it, whereby the force application means (35, 36) act on the jaw press elements (12).

5. Device according to Claim 4, **characterised in that** the jaw press element (12) is rotatable in the rotation plane of the jaw fundament element (11).

6. Device according to Claim 4 or 5, **characterised in that** the jaw fundament element (11) and the jaw press element (12) are linked to each other by sprung means (19), particularly by tension springs (19).

7. Device according to one of the claims 4 to 6, **characterised in that** the jaw fundament element (11) and the jaw press element (12) are guided relative to each other perpendicular to the rotation plane of the press jaws (8).

8. Device according to one of the claims 1 to 7, **characterised in that** sprung means (15) act upon the press jaws (8) in such a manner that the press jaw pair (9) is pretensioned in the direction of its opened position.

9. Device according to one of the claims 1 to 8, **characterised in that** the holder device (28) for the belt fasteners (1) has comb-like recesses (33) for the belt fasteners (1) corresponding to the spacing of the arrangement of the belt fasteners (1).

10. Device according to one of the claims 1 to 9, **characterised in that** the holder device (28) for the belt fasteners (1) has a recess for a guide pin (34) for fixing the belt fasteners (1) in the holder device (28).

11. Device according to one of the claims 1 to 10, **characterised in that** the holder device (28) for the belt fasteners (1) and the base element (3) comprise separate components.

12. Device according to Claim 11, **characterised in that** the base element (3) has a recess (26, 27) for inserting the holder device (28) into the base element (3).

13. Device according to Claim 12, **characterised in that**, in a direction (X) parallel to the rotation axes of the press jaw pair (9), the holder device (28) is insertable into the base element (3) or displaceable in the base element (3).

14. Device according to Claim 13, **characterised in that** the holder device (28) has a length that is 1½ to 2 times as great as the extent of the press jaw pair (9) in this direction.

15. Device according to one of the claims 1 to 14, **characterised in that** the base element (3) has an undercut groove (26) for accommodating the holder device (28).

16. Device according to one of the claims 11 to 15, **characterised in that** the base element (3) serves to accommodate different holder devices (28), whereby each of the different holder devices (28) serves to accommodate a defined belt fastener type.

17. Device according to one of the claims 1 to 16, **characterised in that** the force application means (35, 36) for closing the press jaws (8) are designed as jaws (35, 36) of a vice or of a hydraulic press.

## Revendications

1. Dispositif pour enfoncer des raccords de courroie (1) notamment des crochets en fil de fer (1) dans une courroie (2) comprenant un élément de base (3) avec une installation de fixation (28) pour le raccord de courroie (1), une paire de mors (9) montée pivotante sur un élément de base (3), pour agir en sens opposé sur le raccord de courroie (1) ainsi que des moyens d'actionnement (35, 36) pour rapprocher les mors (8) de la paire de mors (9),
**caractérisé par**
des moyens (13) pour coupler de force le mouvement de basculement des mors (8) par rapport à l'élément de base (3).

2. Dispositif selon la revendication 1,
**caractérisé en ce que**
les moyens (13) de couplage forcé du mouvement de basculement des mors (8) sont constitués par des segments de couronne dentée (13), un segment de couronne dentée (13) d'un mors (8) engrenant avec le segment de couronne dentée (13) de l'autre mors (8).

3. Dispositif selon les revendications 1 ou 2,
**caractérisé en ce que**
les deux mors (8) sont montés pivotants sur l'axe de base (3) autour d'axes de pivotement (7) différents.

4. Dispositif selon l'une des revendications 1 à 3,
**caractérisé en ce que**
le mors respectif (8) comporte un élément principal (11) monté pivotant sur l'élément de base (3) et un élément de compression (12) relié à l'élément principal (11) en étant mobile par rapport à celui-ci, les actionneurs (35, 36) agissant sur les éléments de compression (12).

5. Dispositif selon la revendication 4,
**caractérisé en ce que**
l'élément de compression (12) est pivotant dans le plan de pivotement de l'élément principal (11).

6. Dispositif selon l'une des revendications 4 ou 5,
**caractérisé en ce que**
l'élément principal (11) et l'élément de compression (12) sont reliés par des éléments élastiques (19) notamment par des ressorts de traction (19).

7. Dispositif selon l'une des revendications 4 à 6,
**caractérisé en ce que**
l'élément principal (11) et l'élément de mors (12) sont guidés l'un par rapport l'autre perpendiculairement à l'axe de pivotement des mors (8).

8. Dispositif selon l'une des revendications 1 à 7,
**caractérisé en ce que**
les moyens élastiques (15) agissent sur les mors (8) de façon que la paire de mors (9) soit précontrainte en direction de sa position ouverte.

9. Dispositif selon l'une des revendications 1 à 8,
**caractérisé en ce que**
l'installation de fixation (28) comporte des logements (33) en forme de peigne pour les raccords de courroie (1), ces logements correspondant à la répartition des raccords de courroie (1).

10. Dispositif selon l'une des revendications 1 à 9,
**caractérisé en ce que**
l'installation de fixation (28) pour les raccords de courroie (1) comporte un logement pour une broche (34) bloquant les raccords de courroie (1) dans l'installation de fixation (28).

11. Dispositif selon l'une des revendications 1 à 10,
**caractérisé en ce que**
l'installation de fixation (28) pour les raccords de courroie (1) et l'élément de base (3) sont des pièces distinctes.

12. Dispositif selon la revendication 11,
**caractérisé en ce que**
l'élément de base (3) comporte un logement (26, 27) pour glisser l'installation de fixation (28) dans l'élément de base (3).

13. Dispositif selon la revendication 12,
**caractérisé en ce que**
l'installation de fixation (28) peut se glisser dans la direction (X) parallèlement à l'axe de pivotement de la paire de mors (9) dans l'élément de base (3) ou coulisser dans l'élément de base (3).

14. Dispositif selon la revendication 13,
**caractérisé en ce que**
l'installation de fixation (28) a une longueur correspondant à 1,5 jusqu'à 2 fois l'extension de la paire de mors (9) dans cette direction.

15. Dispositif selon l'une des revendications 1 à 14,
**caractérisé en ce que**
l'élément de base (3) comporte une rainure (26) à contre dépouille pour recevoir l'installation de fixation (28).

16. Dispositif selon l'une des revendications 11 à 15,
**caractérisé en ce que**
l'élément de base (3) sert de logement pour des installations de fixation (28), différentes et chacune des installations de fixation différentes (28) sert à recevoir un type de raccord de courroie déterminé.

17. Dispositif selon l'une des revendications 1 à 16,
**caractérisé en ce que**
les actionneurs (35, 36) pour approcher les mors (8) sont les mors (35, 36) d'un étau ou les mors d'une presse hydraulique.
